Europäisches Patentamt

European Patent Office

Office européen des brevets

(11) Publication number: **0 348 926**
**A2**

## (12) EUROPEAN PATENT APPLICATION

(21) Application number: **89111742.6**

(51) Int. Cl.⁴: **B60C 27/04**

(22) Date of filing: **28.06.89**

(30) Priority: **30.06.88 JP 163037/88**
**25.11.88 JP 297846/88**

(43) Date of publication of application:
**03.01.90 Bulletin 90/01**

(84) Designated Contracting States:
**CH DE FR LI**

(71) Applicant: **Bridgestone Corporation**
**10-1, Kyobashi 1-Chome Chuo-Ku**
**Tokyo 104(JP)**

(72) Inventor: **Nakayama, Takeshi**
**8-33, Murota 2-chome**
**Chigasaki-shi Kanagawa(JP)**
Inventor: **Nishida, Yoshitaka**
**150-7, Kashio-cho Totsuka-ku**
**Yokohama-shi Kanagawa(JP)**
Inventor: **Suzuki, Masao**
**1970, Isshiki Hayama-machi**
**Miura-gun Kanagawa(JP)**
Inventor: **Yamamoto, Junichi**
**827, Kashio-cho Totsuka-ku**
**Yokohama-shi Kanagawa(JP)**

(74) Representative: **Dreiss, Hosenthien &**
**Fuhlendorf**
**Gerokstrasse 6**
**D-7000 Stuttgart 1(DE)**

(54) Tire slippage preventing device and method of manufacturing same.

(57) A tire slippage preventing device (10) for preventing slippage of the tire of a tire assembly (34) of a vehicle put in a running situation on a snowy road or the like is provided with an arm (16), a base portion (16A) of the arm (16) being mounted to a side of the tire assembly (34), and the intermediate portion (16B) of the arm (16) being flexed so that the end portion (16C) thereof is disposed onto an outer periphery of the tire.

The arm (16) has such a reinforcement member (32) as a wire burried therein, so that the end portion (16C) of the arm (16) is prevented from such a deformation as to be separated largely from the tire and it is kept from hitting the vehicle body.

FIG.1

# TIRE SLIPPAGE PREVENTING DEVICE AND METHOD OF MANUFACTURING SAME

## BACKGROUND OF THE INVENTION

### Field of the Invention

The present invention relates to a tire slippage preventing a device applied to a tire of a vehicle running on a snow covered street or so and a method of manufacturing the same.

### Description of the Related Art

In recent years a tire slippage preventing device of a type has been proposed which is provided with a boss portion attached to the wheel of a tire and a plurality of arms radially extending from the boss portion, the respective end portions of the arms being contact with the surface of the tire which is contact with a road surface.

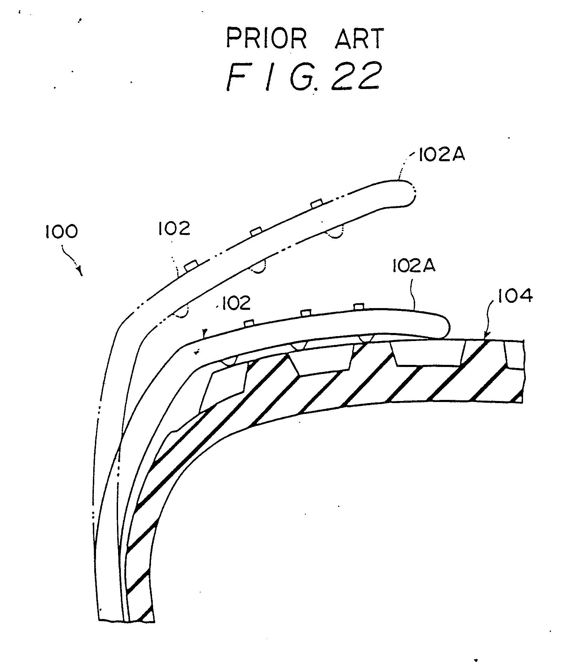

As shown in Fig. 22, however, in a tire slippage preventing device 100 an arm 102 is made of a flexible material like rubber or plastics and it is of a cantilever type. Accordingly, in case that an end portion 102A of the arm 102 is elongated so as to cover a tire 104 sufficiently and a vehicle equipped with the tire slippage preventing device thus constructed runs at a high speed, the end portion 102A of the arm 102 is floated away from the tire 104 due to a centrifugal force, as shown with an imaginary in Fig. 22. As a result, there is such a problem that the tip portion 102A of the arm 102 hits a fender (not shown in the figure) of the vehicle and might be damaged.

In order to overcome the above problem it may be thought that the length of the end portion 102A is shortened to prevent the end portion 102A from floating. However, there is another problem that especially with a wide tire, the arm 102 does not cover the tire 104 sufficiently, so that slippage of the tire 104 can not be prevented effectively, or in some cases it becomes impossible for the vehicle to run up a slope road.

Further, it may be proposed that for elongating the tip portion 102A of the arm 102, the elasticity of the material for the arm 102 or the cross-sectional secondary movement of the arm 102 is increased to prevent the floating of the end portion 102A of arm 102 occurring the centrifugal force. However, such a proposal results in that fatigue due to flexion in a running condition of the vehicle is increased and the arm 102 may be broken or damaged. Thus, durability of the arm 102 will be deteriorated.

## Summary of the Invention

An object of the present invention is to provide a tire slippage preventing device in which the tip portion of an arm is not floated from a tire at the time when the tire is rotated at a high speed even though it is elongated, and a mathod of manufacture the same.

A tire slippage preventing device according to the present invention provides with a base portion disposed on the side of a tire and at least one arm extending from the base portion and disposed to the outer periphery of tire. The tire slippage preventing device is also provided with a reinforcing member buried therein for preventing an end portion of the arm from separating largely from the outer periphery of the tire to a centrifugal force even when the tire slippage preventing device is equipped with the tire. At least one part of the reinforcement member is buried in the arm, and the reinforcement member resists such a deformation that the end portion of the arm is forced to separate from the outer periphery of the tire, so that the arm is prevented from a large deformation. A material having a high tensile strength, at least one part of which is buried in the arm, will be applicable as the reinforcement member.

Also, in a method of manufacturing a tire slippage preventing device according to the present invention, a cavity corresponding to the shape of an arm to be formed is provided in a mold for forming arm, and the cavity is filled with melt resin after a reinforcement member is disposed in the cavity. The arm formed in this way, has the reinforcement member buried in it. The reinforcement member is secured to a pin protruded from the mold into the cavity to be positioned in the cavity so taht it is buried at a desired position in the cavity.

## Brief Description of the Drawings

Fig. 1 to 4 show a tire slippage preventing device of a first embodiment according to the present invention.

Fig. 1 is an exploded perspective view of the tire slippage preventing device;

Fig. 2 is a perspective view of an arm of the tire slippage preventing device;

Fig. 3 is a sectional view taken along a line III-III in Fig. 2;

Fig. 4 is a longitudinal sectional view of a part of the tire slippage preventing device equipped on a wheel;

Fig. 5 is a perspective view of an arm of a second embodiment;

Fig. 6 is a perspective view of an arm of a third embodiment;

Fig. 7 is a perspective view of an arm of a fourth embodiment;

Fig. 8 is a perspective view of an arm of a fifth embodiment;

Fig. 9 is a perspective view of an arm of a sixth embodiment;

Fig. 10 is a perspective view of an arm of a seventh embodiment;

Fig. 11 is a perspective view of an arm of an eighth embodiment;

Fig. 12 is a perspective view of an arm of a ninth embodiment;

Fig. 13 is a perspective view of an arm of a tenth embodiment;

Fig. 14 is a perspective view of an arm of an eleventh embodiment;

Fig. 15 is a perspective view of an arm of a twelfth embodiment;

Fig. 16 is (A) is a sectional view of a part of a reinforcing member;

Figs. 16 (B) to 16 (D) are cross-sectional views of strands constituted by steel cords;

Fig. 17 is a cross-sectional view of a metallic mold;

Fig. 18 is a cross-sectional view of one part of the metallic mold;

Fig. 19 is a constitutional view of a supporting pin fixed with a reinforcement member;

Fig. 20 is a cross-sectional view of another metallic mold;

Fig. 21 is a cross-sectional view of an arm of a thirteenth embodiment corresponding to Fig. 3;

Fig. 22 is an explanatory view of the function of a tire slippage preventing device according to a prior art.

Description of the Preferred Embodiments

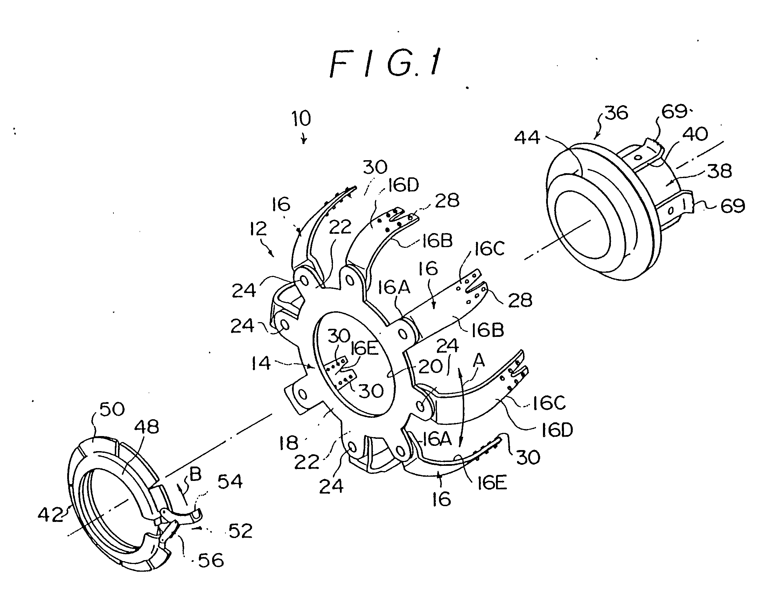

Figs. 1 to 4 show a first embodiment of a tire slippage preventing device 10 according to the present invention.

As shown in Fig. 1, in a tire slippage preventing device 10 its main body 12 is provided with a boss 14 and eight arms 16, each of which is made of a synthetic resin. These members may, for example, by made from thermoplastic elastomer, polyethylene, such thermoplastic plastics as thermoplastic polyurethane, FRP (fiber reinforced plastics), such thermosetting plastics as thermosetting polyurethane.

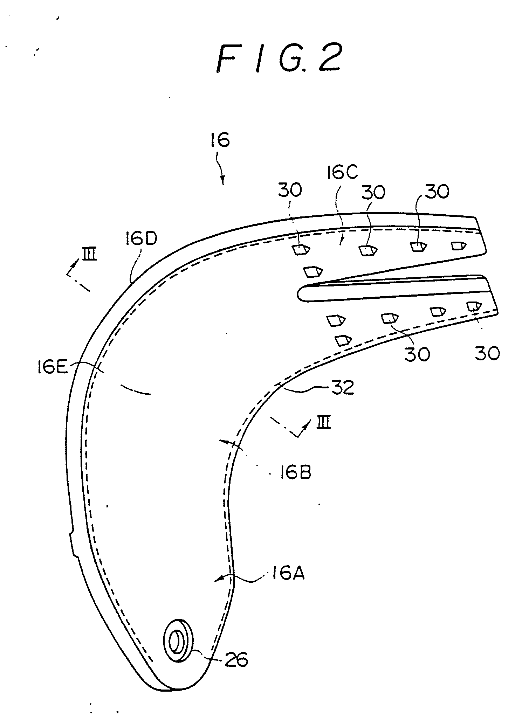

The boss 14, which is disposed at a side of a tire, is provided with a disc portion 18 having a through hole 20 formed in its center and eight connecting portions for connecting the arms 16, which are formed integrally radially protruded from the outer periphery of the disc portion 18 at constant intervals. The arms 16 are connected at their base portion 16A to the connecting portions 22 by pins 24. Intermediate portions 16B of the arms 16 are bent, and end portions 16C thereof are extending in axial direction of the boss 14, they are disposed on a road contact surface of the tire. As shown in Fig. 2, the arm 16 is flat and has a pin insertion hole 26 formed in the base portion 16A for inserting the pin 24. Further, the end portion 16C of the arm 16 is forked in order to give the tire a better footing and improve a thrust on snow.

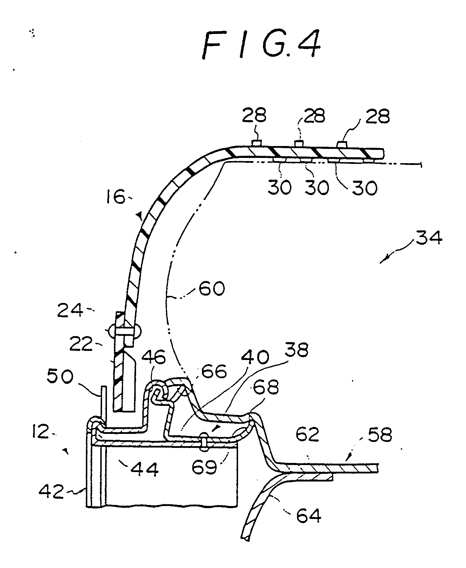

As shown in Figs. 1 and 4, a plurality of spike pins 28 are protruding from a road contact surface 16D of the end portion 16C of the arms 16. Further, a plurality of projections are protruding from a tire contact surface 16E of the end portions 16C of the arms 16.

In the present embodiment, a thickness T of the arm 16 is set at 7 mm.

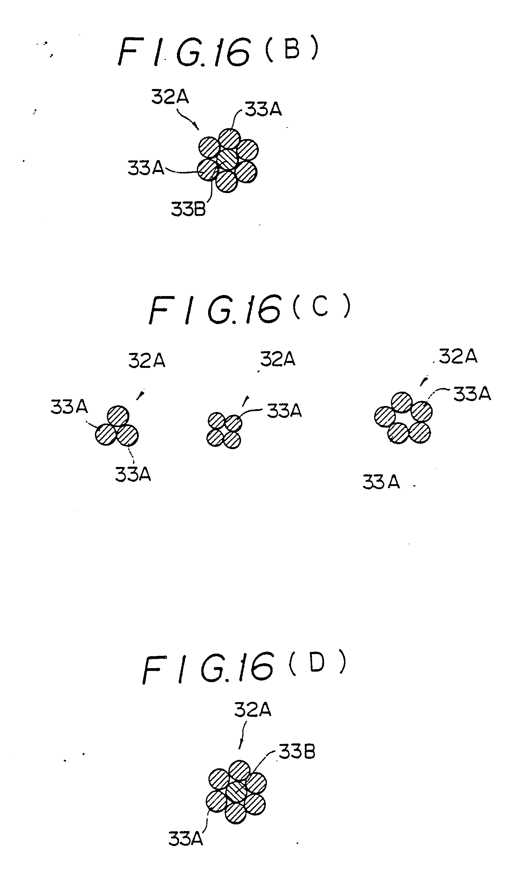

As shown in Fig. 2, for increasing a rigidity of the arm 16, a reinforcing member 32 is embedded. As shown in Fig. 16(A), the reinforcement member 32 of this embodiment is formed of a steel cord 32A with a diameter of 1.5 mm and a hollow cylindrical cover 32B covering the steel cord 32A. A pair of the reinforcement member 32 are buried along the longitudinal direction of the arm 16 and on both sides thereof. The cover 32B is of the same thermoplastic material as the arm 16 with a thickness of about 1 mm. The steel cord 32A and the cover 32B are glued together. Further, instead of the steel cord 32A, such a core material for the reinforcement member 32 can be used as another metal cord, a organic fiber canvas (nylon, teflon, polyester, vinylon), a quebracord, a carbon fiber roving, thin metal membranes, a glass fiber cord, an amorphous cord and the like.

When the steel cord 32A is used, care has to be taken about its construction. For example, in the steel cord 32A having a structure where in the center of a plurality of strands 33A a core strand 33B is disposed, as shown in Fig. 16B, only the core strand 33B is liable to be early damaged due to flexion of the arm 16. Therefore, it is preferable, that as shown in Fig. 16(C), the steel cord 32A is made only of the strands 33A without the core strand 33B. As shown in Fig. 16(D), it is also preferable that the steel cord 32 has the core strand 33B made of a material having a lower elasticity, that is, a larger tensile strain, than steel, such as nylon, urethane, polypropylen, polyester and the like. Additionally, for improving fatigue resistance, a filament constituting the strand 33A or the core strand 33B should be extremely fine, for example, it is preferable that the filament has a diameter of 0.1 mm or less.

It is to be noted that the steel cord 32A may be constituted by only one core strand 33B having a large diameter, for example, a diameter of 1.5 mm, without the strands 33A of the steel cord 32A shown in Fig. 16(B). In this case, the only core strand 33B may be constituted by filaments each having a diameter of, for example, 0.3 mm.

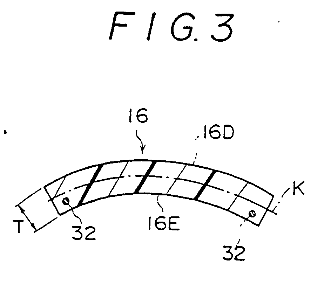

As shown in Fig. 3, the reinforcement members 32 are buried in the arm 16 nearer to the tire contact surface 16E with respect to a center line K. It is ideal that, the reinforcement member 32 are respectively buried at a distance of 1/2D to 3D from the contact tire surface 16E, where D is the diameter of the reinforcement member.

Further, the reinforcement members 32 are respectively buried in a position of 1/2 D to 3 D away from both side surface of the arm 16 in a direction towards the center of the arm 16.

Moreover, each of the arms 16 is by an operation swingable around each of the pins 24 as a fulcrum in the direction of arrow A shown in Fig. 1.

As shown in Figs. 1 and 4, the tire slippage preventing device 10 is provided with a mounting device 36 for mounting the main body 12 to an tire assembly 34, and the mounting device 36 has a cylindrical attachment 38 made of a steel plate, a plurality of spring plate 40 fixed to the cylindrical attachment 38, and an end ring 42 removably secured to the attachment 38 and serving as a member for preventing the main body 12 from slipping off. Each of the spring plates 40 is formed at its tip portion with a connecting tooth 69 bent outward. The attachment 38 is folded several times so that it is formed with an annular projecting portion 44 at one end along the axial direction of the attachment 38 and with an annular recess portion 46 in an intermediate part therealong. the diameter of the projecting portion 44 is smaller than that of through hole 20 of the boss 14.

The end ring 42 is provided with a C-shaped ring portion 48 which is open at one portion along its longitudinal direction and which has a substantially U-shaped sectional configuration corresponding to the annular projecting portion 44. The end ring 42 is also provided projectingly from the ring portion 48 with a flange portion 50 by bending. Additionally, the end ring 42 is equipped with a buckle 52 that connects both ends of the ring portion 48. The buckle 52 is provided with a lever 54 pivotted at one end portion of the ring portion 48 and a link plate 56 rotatably supported at the other end portion of the ring portion 48, the other end portion of the ring plate 56 being pivotted to an intermediate portion of the lever 54.

In the buckle 52, both the end portions of the ring portion 48 are pulled in the direction approaching to each other by a fraction force generated when the lever 54 is brought down in the direction of arrow B, thereby reducing the diameter of the end ring 42. Since the flange 50 is formed with cuts at regular intervals, the end ring 42 is not prevented from the diameter reduction movement. The diameter of the ring portion 48 in the condition that the diameter of the end ring 42 is reduced is slightly smaller than that of the annular projecting portion 44. Accordingly, when the ring portion 48 is wound around the annular projecting portion 44 and fixed to the attachment 38, the end ring 42 is constraint immovable by it's own elastic force. In this state, the outer diameter of the flange portion 50 is sufficiently larger than that of the through hole 20 of the boss 14.

As shown in Fig. 4, the tire assembly 34 equipped with the tire slippage preventing device arranged in the above manner includes a wheel 58 and a tire 60 fitted on the wheel 58. the wheel 58 is provided wiht a rim portion 62 fitted on the tire 60 and a disc portion 64 welded to the rim portion. The rim portion 62 is formed at an end portion of its lug portion and a bent portion of its intermediate portion with annular groove portions 66 and 68 respectively.

The manufacture method for the arms 16 of the tire slippage preventing device is as follows:

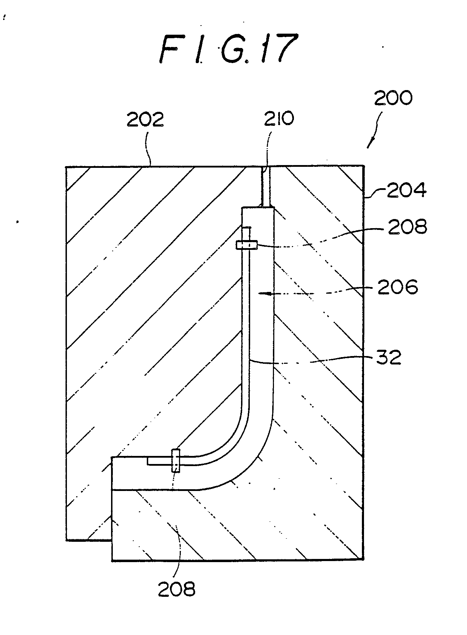

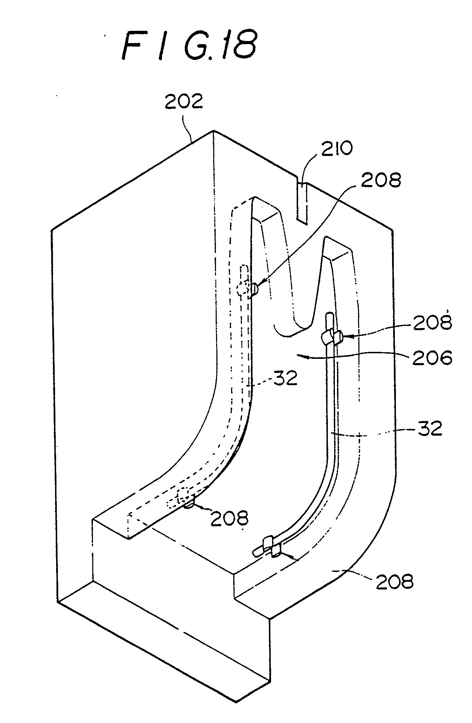

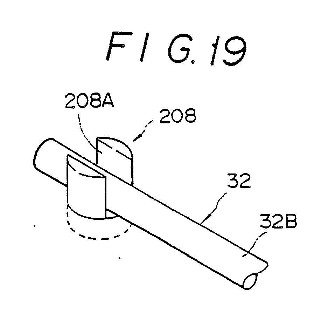

As shown in Fig. 17, a metal mold 200 which is applied to a horizontal injection molding machine for forming the arm 16 includes a first molding member 202 and a second molding member 204. As shown in Figs. 18 and 19, the first molding member 202 is provided with a plurality of metallic supporting pins protruded into a cavity 206 formed in the first molding member 202 and injected with resin. these supporting pins 208 are disposed at positions corresponding to the position where the reinforcement member 32 is expected to be disposed. Moreover, the supporting pins are formed at their tip portions with forked engaging portions 208 with which the reinforcement member 32 is engaged. After setting the reinforcing member 32 is completed, the first molding member 202 and the second molding member 204 are assembled and molten thermoplastic plastics is injected into the cavity 206 through an injection hole 210 formed between the first and second molding members 202 and 204. In this way, by filling first molding member 202 and the second molding member 204 assembled with thermoplastic plastics, the arm 16 wiht the reinforcing member 32 in a predetermined position is formed. Furthermore, since the reinforcing member 32 is held firmly by the supporting pins 208, the reinforcement member 32 is prevented from movement even though injection pressure is increased at the time of injection. Also, since the hollow cylindrical cover 32B of the reinforcing member 22 is also made from thermoplastic plastics, injection of thermoplastic plastics into the metal mold 200 will cause the hollow cylindrical cover 32B to melt, so that the hollow cylindrical cover 32B unites with the arm 16.

Further, the greater the difference in hardness between the thermoplastic plastics of the arm 16 and the thermoplastic plastics of the hollow cylindrical cover 32B is, the better will be the adhesion therebetween.

Moreover, when the molten thermoplastic plastics is injected into metal mold 200, either increasing the injection pressure or the injection speed will increase the adhesion between the arm 16 and the cover 32B, so that the arm 16 of a high quality can be produced.

Furthermore, in the above manufacture method the supporting pins 208 are fixed in the first molding member portion 202. Also, instead of the supporting pin 208 fixed, a pair of supporting pins set at a protruding length of about 3 mm and spaced at a mutual distance of about 4 mm so as to be able to support the reinforcement member 32 therebetween also be arranged as to be freely moved in and out of the cavity 206. In this case, if the supporting pins are moved out of the pins, cavity 206 before the molten thermoplastic plastics injected is solidified, there are no holes corresponding to the supporting pins on the arm 16. Therefore, not only no cracks are likely to form radiating from the holes, but the external appearance of the arm 16 can be improved too.

Further, if the supporting pin is made of the same thermoplastic plastics as the arm 16, the supporting pin 208 too will melt when the molten thermoplastic plastics is injected into the metal mold 200. Therefore, in the same way as mentioned above, the arm 16 will not have the holes corresponding to the supporting pins. In addition, Fig. 18 shows the manufacturing method for the arm 16 where two reinforcement members 32 are disposed in the arm 16, but in the manufacturing method for the arm 16 according to the present invention may be applied to the case where one continuous reinforcement member 32 is disposed in the arm 16.

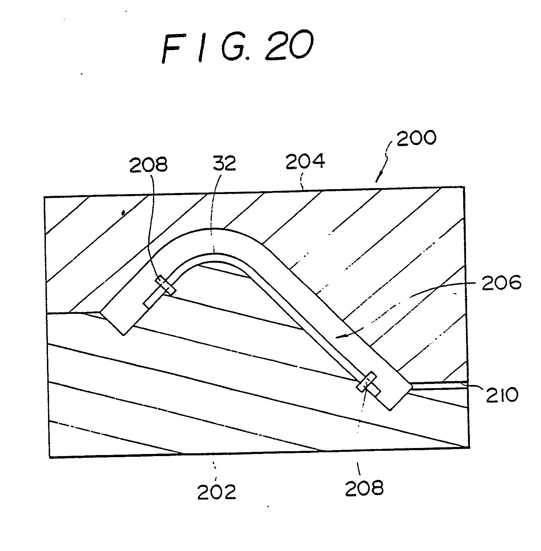

Fig. 20 shows a metal mold 200 which is applied to a vertical injection molding machine. In this case connecting the reinforcement member 32 to the supporting pins 208 is simpler than that in the case of the horizontal injection molding machine.

The following is a description of the procedure of attaching the tire slippage preventing device 10 to a tire and the operation of the fine slippage preventing device attached.

In the first step of attaching the tire slippage preventing device 10 the attachment 38 of the mounting device 36 is mounted to the wheel 58. This mounting is completed easily and simply by pushing the attachment 38 into the inner peripheral portion of the rim portion 62.

That is, as shown in Fig. 4, by the pushign operation of the attachment 38 the connecting tooth 69 of each of the spring plates 40 is elastically deformed in the direction of diminishing radius, and the attachment 38 is moved in the direction of the inside of the rim portion 62. When each connecting tooth 69 falls into the annular groove 68, further movement of the attachment 38 becomes impossible. In this situation, a guiding tooth (not shown) of each of the spring plates 40 abuts elastically on the annular groove portion 66, so that the attachment 38 is securely fixed to the wheel 58.

Next, the main body 12 of the tire slippage preventing device 10 is mounted on the attachment 38. For this mounting, the through hole 20 of the boss 14 is opposed to the attachment 38 and fitted to the same. In this case, the tire 60 of the vehicle has a broad contact area contacting to the ground because it is squeezed by the weight of the vehicle. Accordingly, adjacent two of the eight arms 16 to be disposed on both the sides of the broad contact area of the tire 60 is small in a distance therebetween, if they are, and it is difficult to dispose the tip portions of the end portions 16C of the adjacent two at predetermined positions on the tread portion of the tire 60. The adjacent two arms 16 are disposed so as to take the contact area of the tire 60 therebetween. Additionally, the adjacent two arms 16 are swung around the pins 24 from the positions disposed above in the directions of separation from each other, so that they become disposed at the positions deviated from the predetermined positions along the circumferential direction of the tire 60 on the tread portion of the tire 60.

Next, the end ring 42 is mounted on the attachment 38. This mounting is conducted by such an operation that the side of the flange 50 is brought in opposition to the boss 14, the ring portion 48 is fitted around the annular protruding portion 44 in the condition that the lever 54 is not pushed down, and thereafter the lever 54 is pushed down. In this way, the end ring 42 is securely fixed to the attachment 38. Thus, the mounting operation of the fire slippage preventing device 10 is completed.

Hereafter, shortly after the vehicle commences to run, the adjacent two arms 16 which have been swung around the pins 24 are natural swung back in a direction counter to the previous swinging direction to be disposed in the predetermined positions. In this state, the boss 14 is only movable at least in radial direction by the the distance obtained by deducting the outer diameter of the portion of the attachment 36 fitted with the boss 14 from the diameter of the through hole 20 of the boss 14.

The tire slippage preventing device 10 attached to the tire assembly 34 in this way is rotated together with the rotation of the tire assembly 34 at the time of running of the vehicle, because great friction occur between the projections 30 formed on the end portions 16C of the arms 16 and the tire 60. Since the arm 16 grounded is squeezed to a smaller radius by the weight of the vehicle, for absorbing this condition it is bent elastically and simultaneously therewith the boss 14 is moved in the radial direction of the same and inwardly.

Since the arms 16 have the spike pins 28 provided on their end portions 16C, so that hte grip power gripping a road increased, especially at the times of starting, braking and turning. The tire 60 thereby reveals a travelling ability close to that of a spike tire.

Further, the end portions 16C of the arms 16 are about to lift off the tire 60 die to centrifugal forces caused from a high rotation of the tire 60 at the running time of the vehicle, but because the reinforcement members 32 are buried in each of the arm 16 closer to the tire contact surface 16E than the center of the thickness of the arm 16, the end portions 16C of the arms 16 are prevented from lifting off. Moreover, a reduction of the elastic modulus of each of the arms 16 occurring after the vehicle runs is suppressed by the buried reinforcement members 32, thereby preventing deformation of the arms 16 due to secular changes. ·

In experiments such results have been obtained that the ratio of the elastic modulus of the arm 16 and the reinforcement member 32 is about 50 timies and the lifting off of the arm 16 in this embodiment is 1/2 as compared with the arm in the prior tire slippage preventing device.

Accordingly, even though the end portion 16C of the arm 16 is made longer than that of the prior arm, the lifting off of the arm can be sufficiently improved, so that the tire slippage preventing device 10 can be attached to a tire of a greater width.

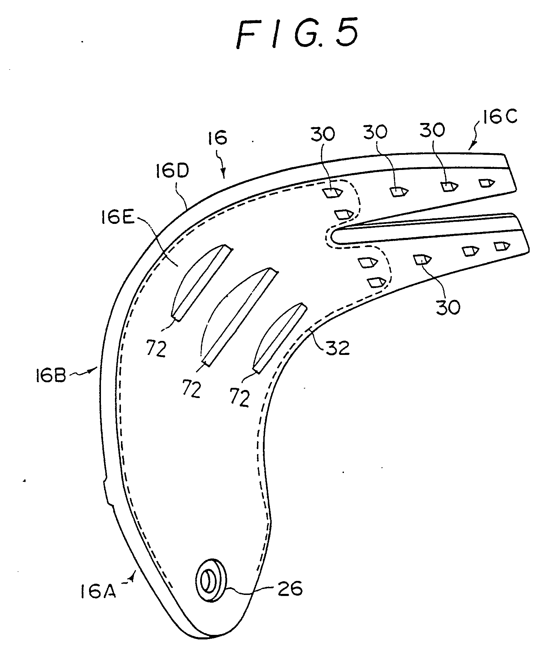

Fig. 5 shows a tire slippage preventing device 10 according to a second embodiment of the present invention.

The arm 16 in the second embodiment has one reinforcement member 32 buried in it in a way that the reinforement member 32 is indented near the bifurcation of the end portion 16C of the arm 16.

Further, for providing additional reinforcement, three ribs 72 extended in the longitudinal direction of the arm 16 are formed along the width direction of the arm 16 on the intermediate portion 16B thereof and on the side of the tire contact surface E.

Moreover, bridge like ribs may be formed together with the arm 16 to both sides of the intermediate portion 16B of the amr 16 for providing additional reinforcement.

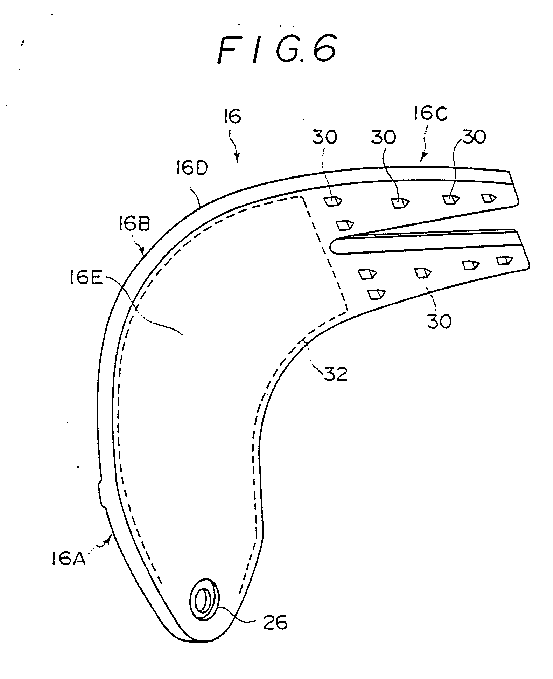

Fig. 6 shows a tire slippage preventing device 10 according to a third embodiment of the present invention.

In the third embodiment one reinforement member 32 is buried in the arm 16, and an intermediate portion of the reinforcement member 32 is foled back at the end portion 16C close to the intermediate portion 16B and in front of the bifurcation of the arm 16.

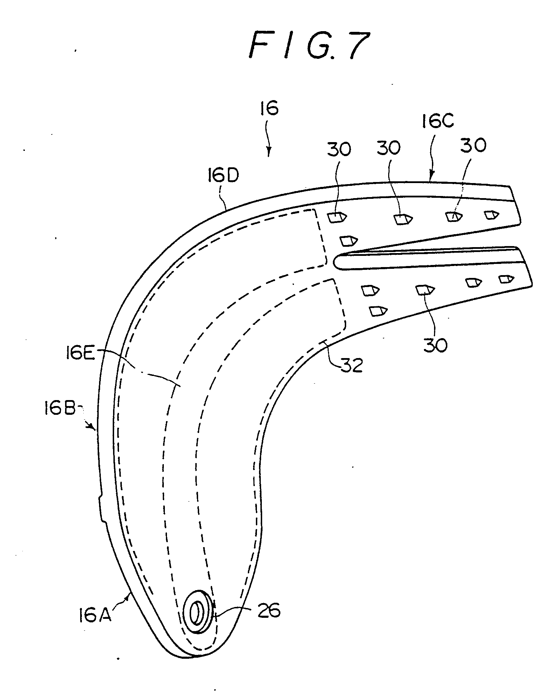

Fig. 7 shows a tire slippage preventing device 10 according to a fourth embodiment of the present invention.

In the fourth embodiment one reinforcement member 32 is folded back in it's intermediate portion down to the base portion 16A of the arm 16. Tehreby the arm 16 will be reinforced in the same way, as if four reinforcement members 32 would be buried in the longitudinal direction of the arm 16.

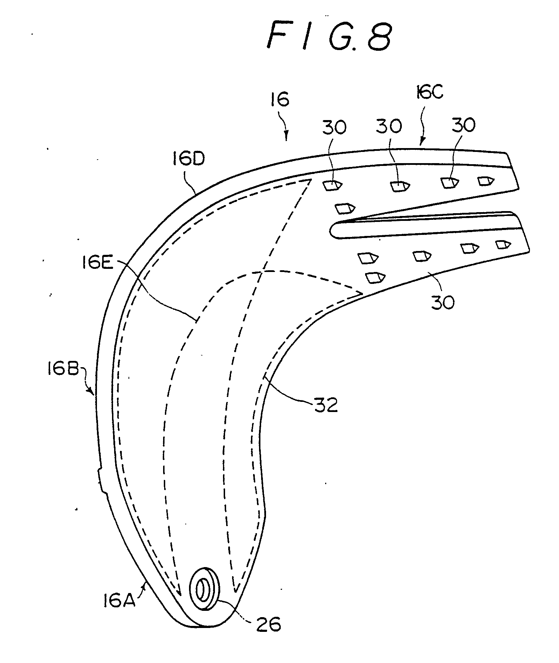

Fig. 8 shows a tire slippage preventing device 10 according to a fifth embodiment of the present invention.

In the fifth embodiment one reinforcement member 32 is buried in the arm 16 crossing over itself.

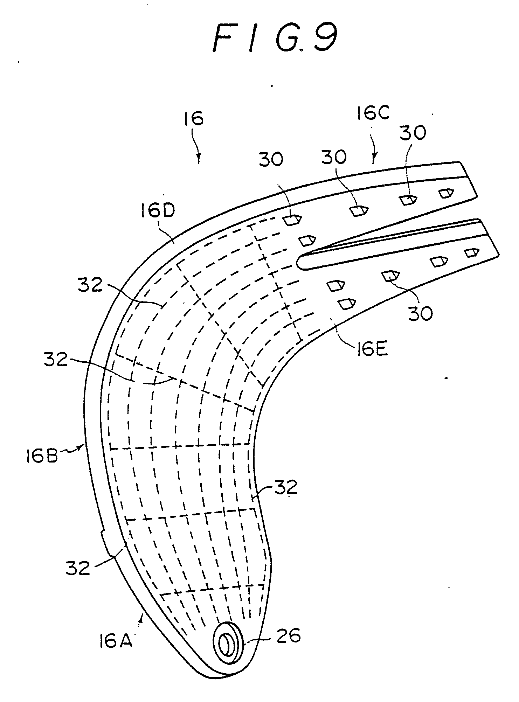

Fig. 9 shows a tire slippage preventing device 10 according to a sixth embodiment of the present invention.

In the sixth embodiment a plurality of reinforcement members 32 are buried in the arm 16 along the longitudinal direction thereof generally in parallel with each other. These reinforcement members 32 are interconnected at their intermediate portions to each other by other reinforcement members 32 extending in the width direction of the arm 16, thereby forming a frame-like disposition.

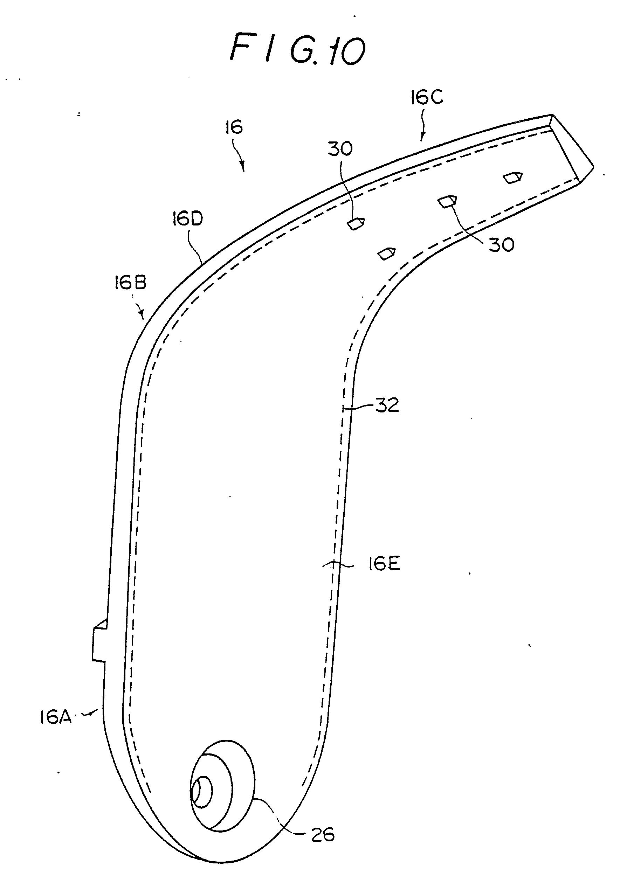

Fig. 10 shows a tire slippage preventing device 10 according to a seventh embodiment of the present invention.

In the seventh embodiment the end portion 16C of the arm 16 is a type formed without a bifurcation.

One reinforcing member 32 is buried an each side of the arm 16.

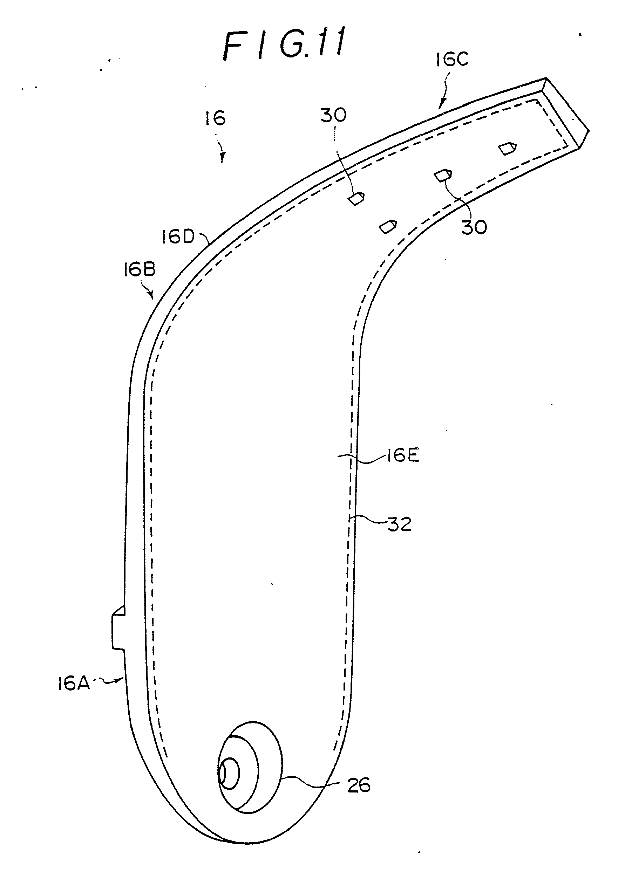

Fig. 11 shows a tire slippage preventing device 10 according to an eighth embodiment of the present invention.

In the eighth embodiment the end portion 16C of the arm 16 is a type formed without a bifurcation.

One reinforcing member 32 is buried as to lie along the inside of both sides and the tip portion of the end portion 16C of the arm 16.

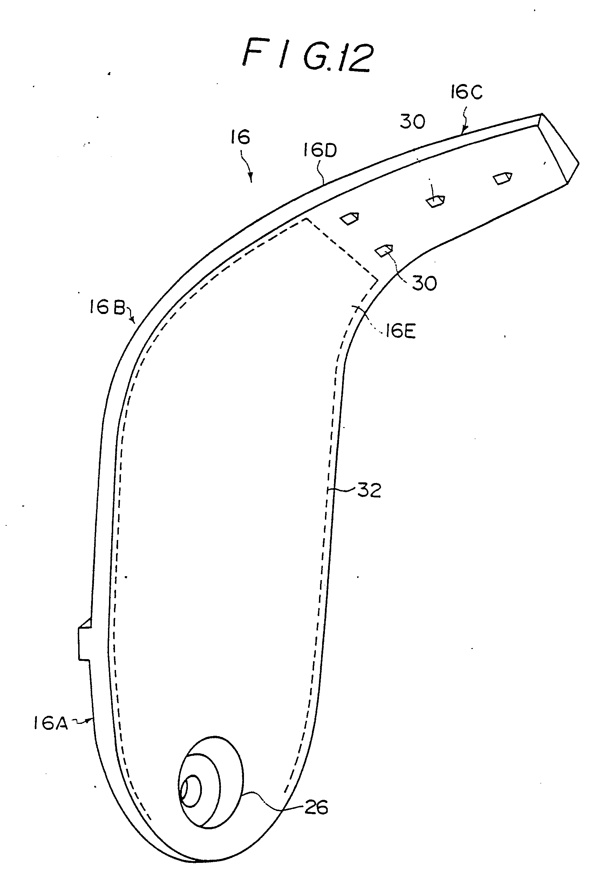

Fig. 12 shows a tire slippage preventing device 10 according to a ninth embodiment of the present invention.

In the ninth embodiment the end portion 16C of the arm 16 is a type formed without a bifurcation.

The reinforcement member 32 is a single one. The reinforcing member 32 is folded back at the end portion 16C closer to the intermediate portion 16B and in front of the projections 30 of the end portion 16C of the arm 16.

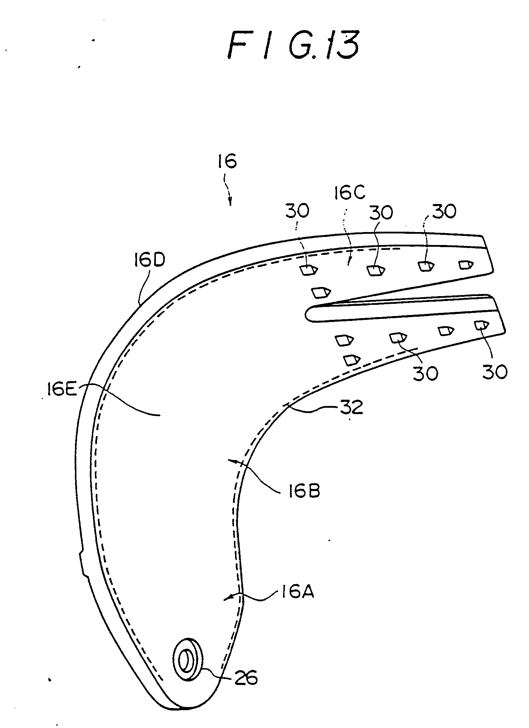

Fig. 13 shows a tire slippage preventing device 10 according to a tenth embodiment of the present invention.

In the tenth embodiment the reinforcement member 32 buried in the arm 16 is not extended up to the tip portion of the end portion 16C of the arm 16, differing from the first embodiment. Structurally, the remaining parts of the tire slippage preventing device 10 are similar to those of the first embodiment.

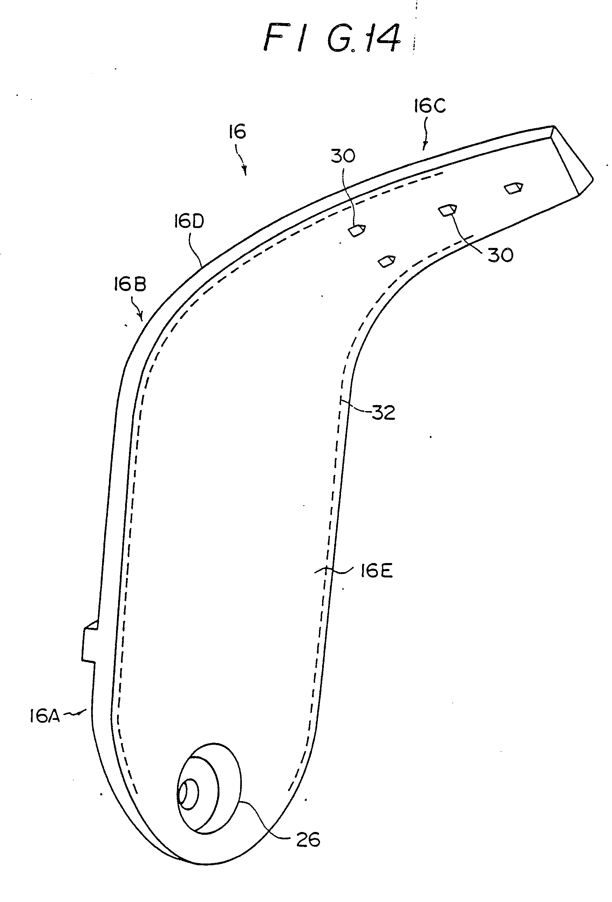

Fig. 14 shows a tire slippage preventing device 10 according to an eleventh embodiment of the present invention.

In the eleventh embodiment the reinforcement member 32 buried in the arm 16 is not extended up to the tip portion of the end portion 16C of the arm 16, differing so from the seventh embodiment. Structurally, the remaining parts of the tire slippage preventing device 10 are similar to those of the first embodiment.

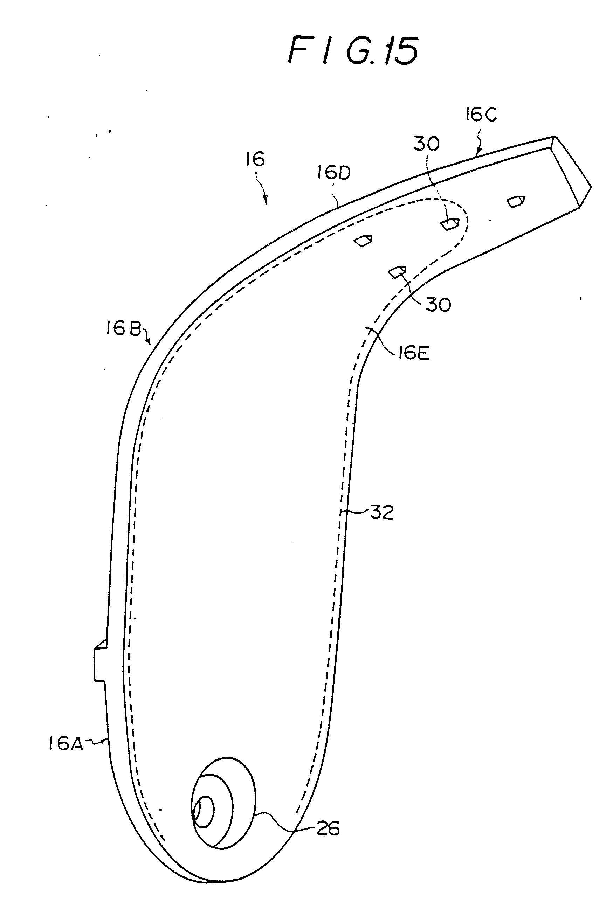

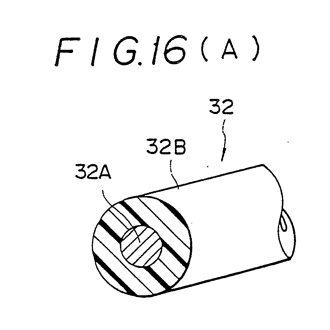

Fig. 15 shows a tire slippage preventing device 10 according to a twelfth embodiment of the present invention.

In the twelfth embodiment the reinforcement member 32 buried in the arm 16 is extended up to the vicinity of the tip portion of the end portion 16C of the arm 16, as compared with that of the ninth embodiment. Structurally, the remaining parts of the tire slippage preventing device 10 are similar to those of the first embodiment.

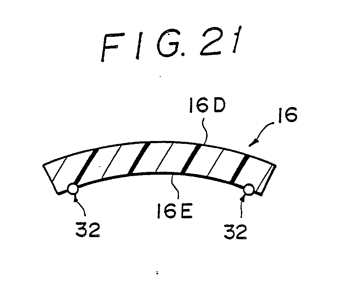

Fig. 21 shows a tire slippage preventing device 10 according to a thirteenth embodiment of the present invention.

In this embodiment the arm 16 is constructed such that the reinforcement members 32 are only partially buried in the arm 16. This has the advantage that the condition of the buried reinforcement member 32 can be confirmed from the outside of the arm 16. Further, burying of the reinforcement member 32 in the first to the twelfth embodiments can be changed to similar form as in the present embodiment.

## Claims

1. A tire slippage preventing device attached to a tire assembly of a vehicle for preventing slippage from occurring between a tire of the tire assembly and a road surface, provided with an arm wherein a base portion is disposed on a side of the tire assembly and an intermediate portion is flexed so that an end portion is disposed on an outer periphery of the tire, characterized in that said arm is provided with a reinforcement member for preventing the intermediate portion of said arm from being flexed in the reverse direction to the flexion of the intermediate portion, whereby the end portion is separated largely from the outer periphery of the tire.

2. A tire slippage preventing device according to claim 1, wherein said reinforcement member is made from a material having a high tensile strength, said material being buried at least partially and being extended in the longitudinal direction of said arm.

3. A tire slippage preventing device according to claim 2, wherein said reinforcement member is made of a plurality of strands.

4. A tire slippage preventing device according to claim 2, wherein said reinforcement member is covered with synthetic resin, and said synthetic resin is united with said arm.

5. A tire slippage preventing device according to claim 2, wherein said reinforcement member is made by disposing a plurality of strands around a core strand, and the core strand has a lower elastic modulus than that of the strands around the core strand.

6. A tire slippage preventing device according to claim 1, wherein said reinforcing member is buried closer to the tire than the center of the thickness of said arm.

7. A tire slippage preventing device according to claim 1, wherein said reinforcing member is disposed in the vicinity of an end portion in the direction of the width of said arm.

8. A tire slippage preventing a device according to claim 1, wherein said reinforcing member is disposed from the base portion to the end portion of said arm.

9. A tire slippage preventing device according to claim 1, wherein the end portion of said arm is formed with a bifurcated portion and said reinforcing member is disposed so as to avoid the bifurcated portion.

10. A tire slippage preventing device according to claim 1, wehrein said arm is formed with a rib for preventing the flexed portion of the intermediate portion from being flexed in the reverse direction on the inside surface of the flexed portion.

11. A manufacturing method for a tire slippage preventing device with a catilever type arm extended from a side of a tire assembly to an outer periphery of a. tire of the tire asembly, an end portion of said arm being disposed between the outer periphery of the tire and a road surface to prevent slippage of the tire, characterized by including a step of disposing a reinforcement member in a mold having a cavity corresponding to said arm and a step of filling said cavity with molten resin to form said arm having the reinforcement member buried therein.

12. A manufacturing method according to claim 11, wherein the reinforcing member is held by a pin protruding into said cavity.

13. A manufacturing method according to claim 11, wherein said pin is made of the same material as the synthetic resin filling said cavity.

14. A manufacturing method according to claim 11, wherein the reinforcement member is disposed close to one side of said cavity, whereby said arm formed has the reinforcement member buried in a position closer to the tire than the center of the thickness of said arm.

15. A manufacturing method according to claim 11, wherein disposing the reinforcement member is disposed in said cavity after it is covered with a coating of synthetic resin, and said molten resin is united with the synthetic resin of the coating.

FIG.1

# F I G. 2

# F I G. 3

16   16D

16E   K

T   32   32

# F I G.4

# FIG.5

# F I G.6

# F I G. 7

16

16C

16D

30  30  30

16E

32

16B

30

16A  26

# F I G. 8

# FIG.9

# F I G. 10

# F I G.11

# F I G.12

# F I G.13

# F I G.14

# F I G. 15

# FIG.16(A)

# F I G. I6 (B)

32A

33A

33A

33B

# F I G. I6 (C)

32A  32A  32A

33A  33A  33A

33A  33A

# F I G. I6 (D)

32A

33B

33A

# F I. G. 17

# F I G.18

## F I G. 19

# F I G. 20

# F I G. 21

16D    16

16E

32    32

PRIOR ART
*F I G. 22*